# EUROPÄISCHE PATENTANMELDUNG

(11) **EP 4 248 754 A1**
(43) Veröffentlichungstag der Anmeldung: **27.09.2023**
(21) Anmeldenummer: 22163983.4
(22) Anmeldetag: 24.03.2022
(51) Int. Cl.: A21C 9/08, A21C 15/00, F25D 13/06

(54) **KÜHLSTATION UND VERFAHREN ZUR KÜHLUNG VON WAFFELBLÄTTERN**

(71) Anmelder: Bühler Food Equipment GmbH, 2100 Leobendorf (AT)
(72) Erfinder: Reithner, Jürgen, 3562 Schönberg (AT); Theimer, Rene, 2112 Lerchenau (AT)
(74) Vertreter: Puchberger & Partner Patentanwälte

(57) **Zusammenfassung**

Verfahren und Kühlstation zur Kühlung von Waffelblättern (2), umfassend: einen Kühlbereich (3) zur Kühlung der Waffelblätter (2), einen sich durch den Kühlbereich (3) erstreckenden Waffelblattförderer (4) zum Transport der Waffelblätter (2), einen ersten Förderabschnitt (7) des Waffelblattförderers (4), in dem die Waffelblätter (2) im Wesentlichen parallel und beabstandet übereinander aufwärts befördert werden, einen zweiten Förderabschnitt (8) des Waffelblattförderers (4), in dem die Waffelblätter (2) im Wesentlichen parallel und beabstandet übereinander abwärts befördert werden, einen ersten Umlenkabschnitt (9), in dem der Waffelblattförderer (4) von dem ersten Förderabschnitt (7) auf den zweiten Förderabschnitt (8) umgelenkt wird, einen zweiten Umlenkabschnitt (10), in dem der Waffelblattförderer (4) von dem zweiten Förderabschnitt (8) wieder auf den ersten Förderabschnitt (7) umgelenkt wird, und eine Verschiebevorrichtung (11) die die Waffelblätter (2) quer zum Verlauf des Waffelblattförderers (4) von einem Förderabschnitt (7,8) des Waffelblattförderers (4), insbesondere vom ersten Förderabschnitt (7), zum anderen Förderabschnitt (7,8), insbesondere in den zweiten Förderabschnitt (8) verschiebt.

## Beschreibung

Die Erfindung betrifft eine Kühlstation sowie ein Verfahren gemäß den Oberbegriffen der unabhängigen Patentansprüche.

Bei der Herstellung von Backprodukten, insbesondere bei der Herstellung von mehrlagigen, schichtförmig aufgebauten Waffelprodukten, die mit Zwischenschichten aus einer essbaren Creme versehenen sind, ist es oft notwendig, die Backprodukte oder Backzwischenprodukte zu kühlen.

Beispielsweise werden bei der Herstellung von Waffelschnitten einzelne Waffelblätter, die aus einer industriellen Herstellungsanlage zum Backen von Waffelblättern kommen, an ihrer Oberseite mit einer essbaren Creme zu versehen. Diese essbare Creme ist beispielsweise eine Schokolade- und/oder Haselnusscreme, die aufgewärmt wird, um sie effizient auf die Waffelblätter auftragen zu können. Um nun mehrere derartiger mit Creme versehener Waffelblätter stapeln zu können, ist es meinst notwendig, die aufgetragene Creme ausreichend abzukühlen. Auch die Waffelblätter von frisch gebildeten, noch warmen und daher weichen, Waffelblöcken müssen gegebenenfalls gekühlt werden.

Moderne Herstellungsanlagen zur Bildung derartiger Waffelprodukte arbeiten in der Regel kontinuierlich oder intermittierend, wobei ein ständiger Produktfluss aufrechterhalten werden muss. Um nun ausreichend Zeit für die Kühlung der Zwischenprodukte zu haben, ist es bekannt, Waffelblätter, die gegebenenfalls zu Waffelblöcken zusammengesetzt sind, nacheinander über einen spiralförmig aufgebauten Förderer durch einen Kühlraum zu befördern. Nachteilig an diesen Spiralkühlern ist es jedoch, dass diese einen relativ großen Platzbedarf haben und zudem kompliziert aufgebaut sind.

Zur Kühlung von Waffelblättern, die noch nicht mit einer Creme versehen sind, ist es bekannt, diese in Fächern vertikal zu befördern. Insbesondere sind die Fächer an einem Waffelblattförderer angebracht, der sich im Wesentlichen entlang einer Hochachse erstreckt und in einem aufsteigenden Teil die Waffelblätter nach oben und in einem absteigenden Teil wieder nach unten befördert, um sie dann in weiterer Folge auf einem Förderband abzulegen, sodass die Waffelblätter einer weiteren Bearbeitungsstation zugeführt werden können. Bei diesem Aufbau werden die Fächer am oberen Umlenkpunkt des Waffelblattförderers um 180° verschwenkt um dann wieder hinunter befördert zu werden. In gleicher Weise werden auch die auf den Fächern aufliegenden Waffelblätter am oberen Umlenkpunkt des Waffelblattförderers um 180° gedreht, womit sie im absteigenden Bereich auf der vormals nach oben weisenden Fläche abgelegt sind. Vorteilhaft an dieser Konstruktion ist, dass sie verhältnismäßig einfach aufgebaut ist und einen geringen Platzbedarf aufweist. Diese Konstruktion ist jedoch nicht dazu geeignet, einseitig mit einer Creme versehene Waffelblätter zu kühlen, da die Blätter beim Wenden im oberen Bereich mit ihrer Cremeseite auf den Fächern aufliegen würden, was zu einer Beschädigung der Zwischenprodukte und zu einer Verschmutzung der Kühlvorrichtung führen würde. Auch Waffelblätter, die zu einem Waffelblock zusammengesetzt sind, können mit einer derartigen Konstruktion nicht beschädigungsfrei gekühlt werden, da die frisch gebildeten und noch warmen Waffelblöcke sehr fragil sind. Zudem können auch Waffelblöcke einseitig mit einer Creme versehen sein.

Aufgabe der Erfindung ist es nun, eine Kühlstation und ein Verfahren zur Kühlung von Waffelblättern zu schaffen, die einfach aufgebaut sind, die einen geringen Platzbedarf aufweisen, aber die dennoch eine qualitativ hochwertige und im Wesentlichen beschädigungsfreie Kühlung erlauben.

Die erfindungsgemäße Aufgabe wird insbesondere durch die Merkmale der unabhängigen Patentansprüche gelöst.

Die Erfindung betrifft insbesondere eine Kühlstation zur Kühlung von Waffelblättern, umfassend:
- einen Kühlbereich zur Kühlung der Waffelblätter,
- einen sich durch den Kühlbereich erstreckenden Waffelblattförderer zum Transport der Waffelblätter,
- einen Übergabebereich, zur Übergabe der Waffelblätter an den Waffelblattförderer,
- einen Abnahmebereich, zur Abnahme der Waffelblätter von dem Waffelblattförderer,
- einen ersten Förderabschnitt des Waffelblattförderers, in dem die Waffelblätter im Wesentlichen parallel und beabstandet übereinander aufwärts befördert werden,
- einen zweiten Förderabschnitt des Waffelblattförderers, in dem die Waffelblätter im Wesentlichen parallel und beabstandet übereinander abwärts befördert werden,
- einen ersten Umlenkabschnitt, in dem der Waffelblattförderer von dem ersten Förderabschnitt auf den zweiten Förderabschnitt umgelenkt wird,
- einen zweiten Umlenkabschnitt, in dem der Waffelblattförderer von dem zweiten Förderabschnitt wieder auf den ersten Förderabschnitt umgelenkt wird.

Die Waffelblätter können dabei mit einer Creme versehen und/oder zu einem Waffelblock zusammengesetzt sein.

Waffelblöcke sind mehrlagige Waffelzwischenprodukte, die mehrere Waffelblattschichten und zwischen den Schichten angeordnete Cremeschichten aufweisen. Die Cremeschichten werden beispielsweise aus einer Nuss- und/oder Schokoladecreme gebildet. Derartige Waffelblöcke werden nach dem Stapeln und Kühlen in der Regel geschnitten, verpackt und als Schnittenprodukte verkauft.

Bevorzugt ist eine Verschiebevorrichtung vorgesehen, die die Waffelblätter quer zum Verlauf des Waffelblattförderers von einem Förderabschnitt des Waffelblattförderers, insbesondere vom ersten Förderabschnitt zum anderen Förderabschnitt, insbesondere in den zweiten Förderabschnitt verschiebt.

Bevorzugt verschiebt die Verschiebevorrichtung die Waffelblätter bzw. Waffelblöcke quer zum Verlauf des Waffelförderers vom aufwärts befördernden in den abwärts befördernden Förderabschnitt.

Gegebenenfalls ist vorgesehen, dass die Verschiebevorrichtung die Waffelblätter im Endbereich eines Förderabschnitts in den Anfangsbereichs des anderen Förderabschnitts transportiert.

Gegebenenfalls ist vorgesehen, dass die Verschiebevorrichtung die Waffelblätter im Endbereich des ersten Förderabschnitts in den Anfangsbereich des zweiten Förderabschnitts transportiert.

Gegebenenfalls ist vorgesehen, dass der Waffelblattförderer zum Transport von einseitig mit einer Creme versehenen Waffelblättern eingerichtet ist und die Verschiebevorrichtung derart ausgestaltet sind, dass die Waffelblätter beim Transport durch die Kühlstation einzeln und stets mit ihrer mit der Creme versehenen Seite nach oben weisend transportiert werden.

Gegebenenfalls ist vorgesehen, dass der erste Förderabschnitt und der zweite Förderabschnitt im Wesentlichen vertikal und parallel nebeneinander verlaufen.

Gegebenenfalls ist vorgesehen, dass die Verschiebevorrichtung dazu eingerichtet ist, bei einem Schiebevorgang mindestens ein Waffelblatt, bevorzugt zwei, drei, vier, fünf oder mehr Waffelblätter von einem Förderabschnitt in den anderen Förderabschnitt zu verschieben.

Gegebenenfalls ist vorgesehen, dass am Waffelblattförderer mehrere im Wesentlichen waagrecht verlaufende Fächer angebracht sind, auf denen die Waffelblätter liegend transportiert werden. Gegebenenfalls ist vorgesehen, dass jedes Fach nur ein Waffelblatt oder einen Waffelblock transportiert.

Gegebenenfalls ist vorgesehen, dass die Verschiebevorrichtung beim Transport der Waffelblätter von einem Förderabschnitt in den anderen Förderabschnitt die Fächer samt den auf den Fächern aufgelagerten Waffelblättern bzw. Waffelblöcken verschiebt.

Gegebenenfalls ist vorgesehen, dass der Waffelblattförderer mehrere Haltevorrichtungen zur Halterung der Fächer am Waffelblattförderer aufweist,
- wobei die Haltevorrichtungen bevorzugt derart ausgestaltet sind, dass sie im Bereich der Verschiebevorrichtung eine Verschiebung der Fächer quer zum Verlauf des Waffelblattförderers von einer Haltevorrichtung des einen Förderabschnitts in eine Haltevorrichtung des anderen Förderabschnitts ermöglichen.

Gegebenenfalls ist eine Haltemechanik vorgesehen, die ein Herausfallen der Fächer aus den Haltevorrichtungen verhindert aber eine Verschiebung der Fächer durch die Verschiebevorrichtung ermöglicht.

Gegebenenfalls ist vorgesehen, dass die Haltemechanik zur Entnahme eines Fachs lösbar, insbesondere werkzeuglos lösbar, ausgebildet ist.

Gegebenenfalls ist vorgesehen, dass die Haltevorrichtungen im ersten Förderbereich und im zweiten Förderbereich im Wesentlichen waagrecht verlaufende, schienen- oder nutförmige Führungen sind.

Gegebenenfalls ist vorgesehen, dass im Bereich der Verschiebevorrichtung, zwischen dem ersten Förderabschnitt und dem zweiten Förderabschnitt, eine Führungsvorrichtung vorgesehen ist, die die Fächer beim Verschiebevorgang jeweils von der Haltevorrichtung des einen Förderabschnitts Richtung und/oder in die Haltevorrichtung des anderen Förderabschnitts führt.

Gegebenenfalls ist vorgesehen, dass die Fächer jeweils einen oder mehrere fingerförmig nach außen ragende Fachabschnitte aufweisen, die im Übergabebereich und/oder im Abnahmebereich zwischen ein oder mehrere Förderelemente greifen, um ein Waffelblatt aufzunehmen oder abzulegen.

Insbesondere betrifft die Erfindung ein Verfahren zur Kühlung von Waffelblättern, die gegebenenfalls mit einer Creme versehen und/oder zu Waffelblöcken zusammengesetzt sind, insbesondere in einer erfindungsgemäßen Kühlstation, umfassend folgende Schritte:
- Transportieren von Waffelblättern in einem ersten Förderabschnitt eines Waffelblattförderers in eine erste Richtung entlang einer Hochachse,
- danach, Transportieren der Waffelblätter in einem zweiten Förderabschnitt des Waffelblattförderers in eine zweite Richtung entlang einer Hochachse, die der ersten Richtung im Wesentlichen entgegengesetzt ist,
- Kühlen der Waffelblätter während des Transports entlang des Waffelblattförderers.

Insbesondere sind die Kühlstation und das Verfahren dazu geeignet und/oder eingerichtet, mit einer Creme versehene Waffelblätter, beispielsweise einseitig mit einer Creme versehene Waffelblätter oder zu einem Waffelblock zusammengesetzte mit einer Creme versehene Waffelblätter, zu kühlen.

Bevorzugt werden die Waffelblätter, die gegebenenfalls mit einer Creme versehen und/oder zu Waffelblöcken zusammengesetzt sind, von einer Verschiebevorrichtung quer zum Verlauf des Waffelblattförderers vom ersten Förderabschnitt in den zweiten Förderabschnitt verschoben.

Gegebenenfalls ist vorgesehen, dass die Waffelblätter beim Transport durch die Kühlstation einzeln und stets mit ihrer mit der Creme versehen Seite nach oben transportiert werden.

Gegebenenfalls ist vorgesehen, dass der Waffelblattförderer angehalten wird, sobald sich die gewünschte Anzahl an Waffelblättern im Bereich der Verschiebevorrichtung befindet, dass die Verschiebevorrichtung in einem Verschiebvorgang das Waffelblatt oder die Waffelblätter bei angehaltenem Waffelblattförderer vom ersten Förderabschnitt in den zweiten Förderabschnitt verschiebt, und dass der Waffelblattförderer anschließend weiterbewegt wird um weitere Waffelblätter in den Verschiebebereich zu befördern.

Gegebenenfalls ist vorgesehen, dass die Waffelblätter von der Verschiebevorrichtung waagrecht verschoben werden.

Gegebenenfalls ist vorgesehen, dass die Verschiebvorrichtung bei einem Schiebevorgang mindestens ein Waffelblatt, bevorzugt zwei, drei, vier, fünf oder mehr Waffelblätter von einem Förderabschnitt in den anderen Förderabschnitt verschiebt.

Gemäß einer bevorzugten Ausführungsform ist vorgesehen, dass die Waffelblätter an den Waffelblattförderer übergeben werden, anschließend im ersten Förderabschnitt des Waffelblattförderers nach oben befördert werden, danach im zweiten Förderabschnitt des Waffelblattförderers nach unten befördert werden und dabei gekühlt werden. Grundsätzlich kann jedoch alternativ auch vorgesehen sein, dass die Waffelblätter zuerst an einen zweiten Förderabschnitt des Waffelblattförderers übergeben werden, der die Waffelblätter nach unten fördert und dass danach die Waffelblätter in dem ersten Förderabschnitt nach oben gefördert werden. Gegebenenfalls ist der Waffelblattförderer in allen Ausführungsformen ein Vertikalförderer.

Bevorzugt ist vorgesehen, dass die, gegebenenfalls mit der Creme versehenen, Waffelblätter während der Bewegung entlang oder durch den Waffelblattförderer gekühlt werden.

Insbesondere ist vorgesehen, dass der Waffelblattförderer zumindest teilweise innerhalb eines Gehäuses vorsehen ist. Bevorzugt ist vorgesehen, dass eine Kühlung vorgesehen ist, insbesondere eine aktive Kühlung, durch die die Waffelblätter und bevorzugt das Innere eines Gehäuses gekühlt werden.

Bevorzugt ist vorgesehen, dass die Verschiebevorrichtung im Endbereich eines Förderabschnitts vorgesehen ist und die Waffelblätter in den Anfangsbereichs des anderen Förderabschnitts transportiert. Hierbei ist insbesondere vorgesehen, dass die Verschiebevorrichtung unmittelbar vor und nach einem Umlenkabschnitt angeordnet ist bzw. wirkt. Hierdurch kann die gesamte Länge der Förderabschnitte des Waffelblattförderers ausgenutzt werden. Gemäß der bevorzugten Ausführungsform wirkt die Verschiebevorrichtung unmittelbar vor und nach dem ersten Umlenkabschnitt. Durch die spezielle Ausgestaltung der Verschiebevorrichtung werden die Waffelblätter stets mit ihrer mit Creme versehenen Seite nach oben weisend transportiert. Bevorzugt ist vorgesehen, dass der erste Förderabschnitt und der zweite Förderabschnitt im Wesentlichen vertikal und parallel nebeneinander verlaufen. Alternativ kann jedoch auch vorgesehen sein, dass die Förderabschnitte schräg nach oben oder nach unten verlaufen.

Bevorzugt ist vorgesehen, dass die Verschiebevorrichtung mindestens ein Waffelblatt, bevorzugt zwei, drei, vier, fünf oder mehr Waffelblätter von einem Förderabschnitt in den anderen Förderabschnitt verschiebt. Insbesondere werden zur Verschiebung der Waffelblätter das oder die Fächer von der Verschiebevorrichtung verschoben.

Gegebenenfalls ist vorgesehen, dass der Waffelblattförderer die Waffelblätter zur Verschiebevorrichtung transportiert. Im Bereich der Verschiebevorrichtung wird der Waffelblattförderer angehalten. Die angehaltenen Fächer bzw. Waffelblätter werden dann bei angehaltenem, unbewegtem Waffelblattförderer von einem Förderabschnitt in den anderen Förderabschnitt verschoben. Diese Verschiebung geschieht quer zum Verlauf des Waffelblattförderers im Bereich der Verschiebevorrichtung und insbesondere waagrecht.

In weiterer Folge wird der Waffelblattförderer weiterbewegt, bis die nächsten Waffelblätter im Bereich der Verschiebevorrichtung angeordnet sind, um dann in analoger Weise diese von einem Förderabschnitt in den anderen Förderabschnitt zu verschieben.

Der Transport der Waffelblätter im ersten Förderabschnitt und/oder im zweiten Förderabschnitt erfolgt bevorzugt geradlinig, insbesondere vertikal. Die Waffelblätter werden beim Transport im ersten Förderabschnitt und/oder im zweiten Förderabschnitt bevorzugt waagrecht gehalten.

Bevorzugt sind die Haltevorrichtungen beim Verschiebevorgang des Waffelblattförderers so zueinander ausgerichtet, dass ein Fach von einer

Haltevorrichtung im ersten Förderabschnitt in eine andere Haltevorrichtung im Förderabschnitt verschoben werden kann. Bevorzugt ist in allen Ausführungsformen vorgesehen, dass gleichzeitig mehrere Waffelblätter und somit gegebenenfalls mehrere Fächer bei einem Verschiebevorgang verschoben werden.

Die Verschiebevorrichtung kann beispielsweise einen Antrieb, insbesondere einen Linearantrieb wie eine Servo-Linearachse, eine Kugelumlaufspindel, eine Zahnstangenachse, einen Elektrozylinder- oder Antrieb, einen Hydraulikzylinder einen Pneumatikzylinder oder einen ähnlichen Antrieb umfassen, der über einen Schiebebalken auf die Fächer wirkt. Der Antrieb der Verschiebevorrichtung ist bevorzugt mit der Steuerung des Waffelblattförderers gekoppelt, um den Verschiebevorgang dann auszuführen, wenn der Waffelblattförderer in der richtigen Position angehalten ist.

Bevorzugt ist vorgesehen, dass die Waffelblätter mit ihrer nach oben weisenden Cremeseite liegend auf den Fächern transportiert werden. Bevorzugt umfassen die Kühlstation und insbesondere der Waffelblattförderer eine Vielzahl an Fächern. Auf jedem Fach wird bevorzugt nur ein einziges Waffelblatt befördert. Bevorzugt wird auf jedes Fach ein Waffelblatt aufgelegt.

Bevorzugt ist vorgesehen, dass im ersten Umlenkabschnitt und im zweiten Umlenkabschnitt keine Waffelblätter auf den Fächern angeordnet sind. Insbesondere werden die Waffelblätter vor den Umlenkbereichen entweder durch die Verschiebevorrichtung verschoben, oder im Abnahmebereich von den Fächern abgenommen. Bevorzugt ist der Übergabebereich nach einem Umlenkabschnitt angeordnet.

Bevorzugt ist vorgesehen, dass die Fächer jeweils ein oder mehrere fingerförmig nach außen ragende Fachabschnitte aufweisen. Diese fingerförmigen Fachabschnitte sind dazu geeignet und/oder eingerichtet, die Waffelblätter von einer Fördervorrichtung zur Zuführung der Waffelblätter abzunehmen und/oder die Waffelblätter auf eine Fördervorrichtung zum Abtransport der Waffelblätter abzulegen. Insbesondere sind Fördervorrichtungen vorgesehen, die an ihren der Kühlstation zugeordneten bzw. zugewandten Enden fingerförmige Förderfortsätze umfassen. Die fingerförmigen Fachabschnitte ragen zwischen die fingerförmigen Fortsätze der Fördervorrichtungen und werden kammartig durch diese hindurch bewegt, um die Waffelblätter abzunehmen und/oder abzulegen.

Gegebenenfalls weisen die Fächer einen zentralen Steg auf, von dem beidseitig fingerförmige Fachabschnitte abstehen. Insbesondere kann es notwendig sein, beidseitig abstehende Fachabschnitte vorzusehen, da die Fächer von einem Förderabschnitt in den anderen verschoben werden und daher beidseitig mit fingerförmigen Fachabschnitten versehen sein müssen.

Das Verfahren zur Kühlung von einseitig mit einer Creme versehener Waffelblätter kann insbesondere wie folgt ablaufen:
Die einseitig mit einer Creme versehenen Waffelblätter werden über eine Fördervorrichtung der Kühlstation zugeführt. Gegebenenfalls wird jedes Waffelblatt im Bereich der Kühlstation angehalten. In weiterer Folge wird das Waffelblatt an den Waffelblattförderer übergeben. Dies geschieht insbesondere dadurch, dass fingerförmig nach außen ragende Fachabschnitte das Waffelblatt von unten greifen und von der Fördervorrichtung abheben. In weiterer Folge wird das Waffelblatt mit der nach oben weisenden Cremeschichte entlang des Waffelblattförderers bewegt. Insbesondere wird es entlang zweier Förderabschnitte bewegt, wobei ein Förderschnitt ein nach oben verlaufender Förderabschnitt und ein weiterer Förderabschnitt ein nach unten verlaufender Förderabschnitt ist. Insbesondere durch diese Anordnung ist eine platzsparende und effiziente Kühlung möglich.

Um zu verhindern, dass die Waffelblätter am oberen Umlenkpunkt, insbesondere im Umlenkbereich des Waffelblattförderers, um 180° gewendet werden, umfasst das Verfahren bevorzugt folgende Schritte:
Im Bereich einer Verschiebevorrichtung werden die Waffeln von einem Förderabschnitt auf den anderen Förderabschnitt verschoben. Dies geschieht vor dem Umlenkabschnitt. Die Waffelblätter werden quer zum Verlauf des Waffelblattförderers und bevorzugt waagrecht verschoben. Dadurch können die Waffelblätter stets mit ihrer mit der Creme versehenen Seite nach oben durch den Kühlbereich befördert werden. Die Waffelblätter werden vor dem Umlenkbereich von einem Förderabschnitt zum anderen transportiert, sodass im Umlenkabschnitt auf den Fächern keine Waffelblätter aufliegen oder angeordnet sind.

In weiterer Folge werden die Waffelblätter entlang des Waffelblattförderers weiter befördert und dadurch weiter gekühlt.

Die Waffelblätter werden weiter zu einem Abnahmebereich befördert. Dort werden die Waffelblätter bevorzugt auf eine Fördervorrichtung abgelegt und weiter abtransportiert.

Bevorzugt ist vorgesehen, dass der Waffelblattförderer stillsteht bzw. unbewegt bleibt, wenn die Verschiebevorrichtung die Waffelblätter quer zum Verlauf des Waffelblattförderers verschiebt.

Bevorzugt werden die Waffelblätter in einer industriellen Herstellungsanlage zur Herstellung von Waffelblättern gebacken und in weiterer Folge in einer Streichstation mit einer Cremeschicht versehen. Diese einseitig mit einer Cremeschicht versehenen Waffelblätter werden dann der Kühlstation zugeführt.

Bevorzugt werden die gekühlten mit einer Creme versehenen Waffelblätter in weiterer Folge einer Stapelvorrichtung zugeführt, in der mehrere Waffelblätter und Cremeschichten schichtförmig übereinander gestapelt werden. In weiterer Folge können diese schichtförmig aufgebauten Blöcke zerschnitten und verpackt werden, um Backprodukte zu bilden.

Die Kühlstation kann beispielsweise 100 bis 300 Fächer umfassen. Die Kühldauer beträgt beispielsweise 10 bis 30 Minuten, bevorzugt 15 bis 20 Minuten. Die Kühlstation kann beispielsweise eine Höhe von 2m bis 4m aufweisen. Die Kühlstation kann beispielsweise einen Durchsatz von 5 bis 30 Waffelblättern pro Minute aufweisen. Gegebenenfalls können zwei Kühlstationen oder mehr Kühlstationen nacheinander angeordnet sein, sodass die Waffelblätter diese Kühlstationen eine nach der anderen durchlaufen. Gegebenenfalls können mehrere erfindungsgemäße Kühlstationen aneinandergereiht sein.

Gegebenenfalls kann an einer erfindungsgemäßen Kühlstation eine herkömmliche Kühlstation nachgereiht werden. Beispielsweise können frisch gebildete, weiche Waffelblöcke in der erfindungsgemäßen Kühlstation schonend gekühlt werden, ohne dass sie im ersten Umlenkabschnitt gewendet werden. Wurden die Waffelblöcke jedoch in der erfindungsgemäßen Kühlstation auf eine gewisse Temperatur heruntergekühlt, so können sie gegebenenfalls in einer herkömmlichen Kühlstation weiter gekühlt werden.

Die Waffelblätter sind bevorzugt unter Druck ausgebackene Flachwaffel- oder Hohlwaffelblätter aus einer im unausgebackenen Zustand mindestens 40% Wasser enthaltenden, flüssigen Backmasse. Die Waffelblätter weisen bevorzugt Abmessungen im Bereich von etwa 40cm x 80cm auf. Die Kerndicke der Waffelblätter beträgt beispielsweise etwa 1-3mm. Die Waffelblätter weisen eine poröse, knusprig-spröde Konsistenz auf.

Die Creme ist beispielsweise eine fetthaltige, essbare Creme, wie beispielsweise eine Haselnusscreme oder eine Schokoladencreme.

In weiterer Folge wird die Erfindung anhand der Figuren und anhand von Ausführungsbeispielen weiter beschrieben.
Fig. 1 zeigt eine schematische, in der Höhe reduziert dargestellte Seitenansicht bzw. Schnittdarstellung von Komponenten einer Kühlstation.
Fig. 2 zeigt einen unteren Bereich eines Waffelblattförderers.
Die Fig. 3a bis 3c zeigen Komponenten der Kühlstation im Bereich der Verschiebevorrichtung.

Wenn nicht anders angegeben, so entsprechen die Bezugszeichen folgenden Komponenten: Creme 1, Waffelblatt 2, Kühlbereich 3, Waffelblattförderer 4, Übergabebereich 5, Abnahmebereich 6, erster Förderabschnitt 7, zweiter Förderabschnitt 8, erster Umlenkabschnitt 9, zweiter Umlenkabschnitt 10, Verschiebevorrichtung 11, Endbereich (des ersten Förderabschnitts) 12, Anfangsbereich (des zweiten Förderabschnitts) 13, Fach 14, Haltevorrichtung 15, Fördervorrichtung 16, Gehäuse 17, Fachabschnitt 18, Führungsvorrichtung 19, Förderglied 20, Stützfortsatz 21, Haltemechanik 22.

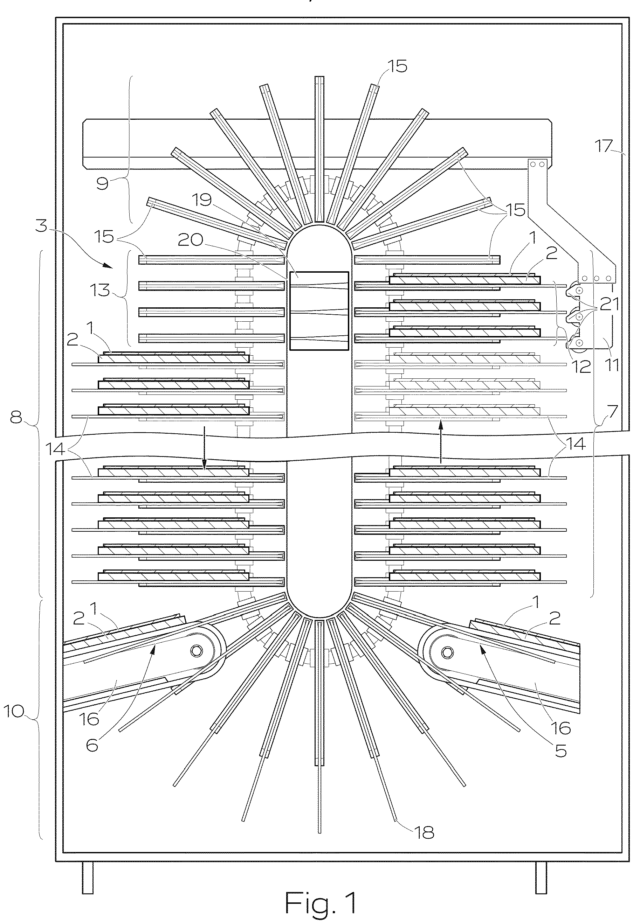

**Fig. 1** zeigt eine Kühlstation mit einem Waffelblattförderer 4, der insbesondere als Endlosförderer bzw. als Vertikalförderer ausgebildet ist. Der Waffelblattförderer 4 ist dazu geeignet und/oder eingerichtet, Waffelblätter 2, die an ihrer Oberseite mit einer Creme 1 versehen sein können, entlang eines Kühlbereichs 3 zu befördern, um eine Kühlung zu bewirken. Der Waffelblattförderer 4 umfasst einen ersten Förderabschnitt 7, in dem die Waffelblätter 2 aufwärts befördert werden. Zudem umfasst der Waffelblattförderer 4 einen zweiten Förderabschnitt 8, in dem die Waffelblätter 2 abwärts befördert werden. Zwischen den beiden Förderabschnitten 7, 8 sind Umlenkabschnitte 9, 10 vorgesehen, insbesondere ein erster Umlenkabschnitt 9, in dem der Waffelblattförderer 4 von dem ersten Förderabschnitt 7 auf den zweiten Förderabschnitt 8 umgelenkt wird und ein zweiter Umlenkabschnitt 10, in dem der Waffelblattförderer 4 vom zweiten Förderabschnitt 8 auf den ersten Förderabschnitt 7 umgelenkt wird. Im Bereich der Umlenkabschnitte 9, 10 wird der Waffelblattförderer 4 in der vorliegenden Ausführungsform um 180° umgelenkt. Um zu vermeiden, dass dadurch auch die Waffelblätter 2, insbesondere wenn sie mit einer Creme 1 versehen sind, gewendet werden, ist eine Verschiebevorrichtung 11 vorgesehen. Die Verschiebevorrichtung 11 ist dazu geeignet und/oder eingerichtet, Waffelblätter 2 derart von einem Förderabschnitt in den anderen zu verschieben, dass die Creme 1 stets an der Oberseite des Waffelblattes 2 angeordnet ist. Insbesondere liegen die Waffelblätter 2 bei dem Verschieben auf Fächern 14. Alternativ kann die Konstruktion auch umgekehrt betrieben werden, sodass die Waffelblätter 2 im ersten Förderabschnitt 7 abwärts und im zweiten Förderabschnitt 8 aufwärts befördert werden.

In der vorliegenden Ausführungsform verschiebt die Verschiebevorrichtung 11 die Waffelblätter 2 vom ersten Förderabschnitt 7 in den zweiten Förderabschnitt 8. Dies geschieht vor dem ersten Umlenkabschnitt 9. Insbesondere ist die Verschiebevorrichtung 11 im Endbereich 12 des ersten Förderabschnitts 7 sowie im Anfangsbereich 13 des zweiten Förderabschnitts 8 angeordnet. Die Waffelblätter 2 werden bevorzugt soweit wie möglich entlang des ersten Förderabschnitts 7 in die Höhe befördert und dann, bevor sie im ersten Umlenkabschnitt 9 schräg gestellt werden, in den zweiten Förderabschnitt 8 verschoben. Diese Verschiebung geschieht bevorzugt quer zum Verlauf des Waffelblattförderers 4 in den Förderabschnitten 7, 8. Insbesondere geschieht die Verschiebung horizontal und/oder entlang der Haupterstreckungsrichtung der Waffelblätter 2. In weiterer Folge werden die Waffelblätter 2 mit ihrer noch immer an der Oberseite angeordneten Creme 1 entlang des zweiten Förderabschnitts 8 des Waffelblattförderers 4 weiter und insbesondere hinunter befördert. Während dieser Förderung durch den Kühlbereich 3 werden die Waffelblätter 2 und insbesondere die darauf angeordnete Creme 1 gekühlt. Hierzu kann in allen Ausführungsformen eine Kühlvorrichtung wie beispielsweise ein Gebläse oder ein Kühlaggregat vorgesehen sein. Der Kühlbereich 3 ist bevorzugt in einem Gehäuse 17 angeordnet, auf das oder in dem die Kühlvorrichtung wirkt. Das Gehäuse 17 weist die notwendigen Öffnungen auf, um die Waffelblätter 2 zu- und abzuführen. Beispielsweise wird die Kühlluft seitlich, also parallel zur Umlenkachse des Waffelblattförderers 4 in das Gehäuse 17 eingebracht. Bevorzugt ist ein Entfeuchter vorgesehen, der bei der Kühlung anfallende Feuchtigkeit aus dem Gehäuse 17 entfernt. Bevorzugt wird die Kühlluft in einem unteren Bereich des Gehäuses 17 eingebracht und in einem oberen Bereich entnommen.

Die Verschiebevorrichtung 11 umfasst bevorzugt einen Antrieb, insbesondere einen Linearantrieb. Dieser Antrieb kann in allen Ausführungsformen beispielsweise als Servo-Linearachse mit einer Kugelumlaufspindel oder einer Zahnstangenachse ausgebildet sein.

Bevorzugt ist der Antrieb für die Verschiebevorrichtung 11 in allen Ausführungsformen obenliegend ausgebildet und innerhalb des Gehäuses 17 der Kühlstation angeordnet. Durch Betätigen des Antriebs wird die Verschiebevorrichtung 11 betätigt und die Waffelblätter 2 werden von einem Förderabschnitt in den anderen Förderabschnitt verschoben.

Bevorzugt ist in allen Ausführungsformen vorgesehen, dass der Antrieb der Verschiebevorrichtung 11 im ersten Umlenkabschnitt 9 angeordnet ist. Insbesondere ist dieser Antrieb zwischen den Haltevorrichtungen 15 im ersten Umlenkabschnitt 9 vorgesehen. In diesem Bereich gibt es einen Freiraum für den Antrieb, da die Fächer 14 bzw. die Waffelblätter 2 in einem Bereich weiter unten, insbesondere im Endbereich des ersten Förderabschnitts verschoben werden und somit nicht in den ersten Umlenkabschnitt 9 gelangen. Der Waffelblattförderer 4, insbesondere die Haltevorrichtungen 15 im ersten Umlenkabschnitt 9, überragen somit den Antrieb der Verschiebevorrichtung 11 und die Verschiebevorrichtung 11 als solche im ersten Umlenkabschnitt 9 nach oben hin. Diese Konfiguration ermöglicht eine Verringerung der Bauhöhe der Kühlstation.

In allen Ausführungsformen kann die Verschiebevorrichtung 11 einen oder mehrere Stützfortsätze 21 umfassen. Diese Stützfortsätze 21 dienen dazu, die äußeren Enden der Fächer 14 in ihrer Lage derart zu zentrieren, dass die Verschiebung der Fächer 14 bzw. der Waffelblätter 2 erleichtert wird. Insbesondere können, bedingt durch eine spielbehaftete Lagerung der Fächer 14 in den Haltevorrichtungen 15, die äußeren Enden der Fächer 14 in gewissem Maße nach unten geneigt sein. Die Stützfortsätze 21 der Verschiebevorrichtung 11 kommen beim Verschieben mit den Fächern 14 in Eingriff und heben die hinteren Kanten der Fächer 14 an, sodass die Fächer 14 ausgerichtet und in einer vorbestimmten Lage verschoben werden.

Wie in der vorliegenden Ausführungsform, können die Stützfortsätze 21 Rollen aufweisen, die beispielsweise kugelgelagert sind, und die eine besonders schonende Anhebung und Verschiebung der Fächer 14 bzw. der Waffelblätter 2 ermöglichen.

Die Zuführung der Waffelblätter 2 erfolgt über eine Fördervorrichtung 16. Auch der Abtransport der Waffelblätter 2 kann über eine Fördervorrichtung 16 erfolgen. Die Fördervorrichtungen 16 können beispielsweise als Riemenförderer ausgebildet sein.

Der Transport der Waffelblätter 2 erfolgt bevorzugt auf Fächern 14. Diese Fächer 14 sind vorzugsweise platten- oder gitterförmige Körper, die an dem Waffelblattförderer 4 angebracht bzw. lösbar angebracht sind. In der vorliegenden Ausführungsform umfasst der Waffelblattförderer 4 mehrere Haltevorrichtungen 15. Die Haltevorrichtungen 15 ermöglichen eine Halterung der Fächer 14 am Waffelblattförderer 4. Insbesondere werden die Fächer 14 derart am Waffelblattförderer 4 gehalten, dass sie entlang des ersten Förderabschnitts 7 und des zweiten Förderabschnitts 8 mit dem Waffelblattförderer 4 mitbewegt werden. Zudem sind die Haltevorrichtungen 15 derart ausgestaltet, dass die Fächer 14 gegenüber dem Waffelblattförderer 4 zumindest im Bereich der Verschiebevorrichtung 11 bewegt werden können, und dass die Verschiebevorrichtung 11 die Fächer 14 von einem Förderabschnitt zum anderen, insbesondere vom ersten Förderabschnitt 7 zum zweiten Förderabschnitt 8, verschieben kann. Bevorzugt sind die Haltevorrichtungen 15 nut- bzw. schienenförmig ausgebildet. Dadurch ist in eine Richtung, insbesondere die Richtung entlang der Hochachse, eine formschlüssige Halterung der Fächer 14 am Waffelblattförderer 4 gegeben. Quer dazu, also längs der Nut oder der Schiene, kann eine Verschiebung der Fächer 14 erfolgen.

Gegebenenfalls ist vorgesehen, dass die Fächer 14 beim Übergang vom zweiten Förderabschnitt zurück auf den ersten Förderabschnitt, also im zweiten Umlenkabschnitt 10, nicht von einer Verschiebevorrichtung 11 verschoben werden, sondern dass die Fächer 14 in diesem Bereich einfach umgelenkt und um 180° verschwenkt werden.

Werden die Fächer 14 im zweiten Umlenkabschnitt 10 verschwenkt und nicht parallel verschoben, so können sie insbesondere dazu eingesetzt werden, die Waffelblätter 2 während der Schwenkbewegung von einer Fördervorrichtung abzunehmen.

Um zu verhindern, dass die Fächer 14 im zweiten Umlenkabschnitt 10 aus den Haltevorrichtungen 15 fallen, kann eine Haltemechanik 22 vorgesehen sein. Beispielsweise können die Fächer 14 mittig mit einer auskragenden Nase versehen sein, die ein Herausfallen der Fächer 14 aus den Haltevorrichtungen 15 verhindert. Die Nasen der Fächer 14 sind dabei bevorzugt derart angeordnet, dass dennoch eine Verschiebung der Fächer 14 durch die Verschiebevorrichtung 11 ermöglicht ist. So können die Nasen der Fächer 14 derart ausgebildet sein, dass die Fächer 14 zwar von einem Förderabschnitt zum anderen verschoben werden können, ein Herausziehen der Fächer 14 nach außen jedoch verhindert ist.

Zur Halterung der Fächer 14 bzw. als Anschlag für die Nasen können die Haltevorrichtungen 15 an ihren Enden oder in einem anderen Bereich jeweils ebenfalls eine Nase bzw. einen Haken aufweisen, der eine formschlüssige Halterung der Nasen der Fächer 14 ermöglicht, sodass die Fächer 14 nicht nach außen hin aus den Haltevorrichtungen 15 gezogen werden können.

Die Haltemechanik 22 ist bevorzugt lösbar, insbesondere werkzeuglos lösbar ausgebildet. Dadurch können die Fächer 14 einfach durch Türen der Kühlstation entnommen werden.

Beispielsweise ist die Nase federnd ausgebildet. Durch Hineindrücken der Nase kann die Haltemechanik 22 gelöst werden und das Fach 14 kann entnommen werden.

Gegebenenfalls ist in allen Ausführungsformen vorgesehen, dass die Haltevorrichtungen 15 und die Fächer aus Materialien gebildet sind, oder eine Oberfläche aufweisen, die die Verschiebung der Fächer 14 begünstigt bzw. erleichtert. Beispielsweise kann eine Gleitpaarung für die beiden Komponenten Fach 14 und Haltevorrichtung 15 gewählt werden. Beispielsweise kann eine Gleitpaarung von hartcoatiertem Aluminium und Edelstahl gewählt werden.

Alternativ kann beispielsweise ein Metallteil mit einer Gleitschicht aus Kunststoff, beispielsweise aus POM, eingesetzt werden. Beispielsweise weisen die Haltevorrichtungen 15 jeweils einen Grundkörper aus Edelstahl auf, der mit einer POM-Gleitschicht versehen ist. Die Fächer 14 können beispielsweise aus Edelstahl gebildet sein.

Grundsätzlich ist jede weitere geeignete Gleitpaarung möglich, wobei insbesondere auf eine Eignung für den Transport von Lebensmitteln geachtet werden muss.

Die Zuführung der Waffelblätter 2 zum Waffelblattförderer 4 erfolgt in einem Übergabebereich 5. Der Abtransport der gekühlten Waffelblätter 2 vom Waffelblattförderer 4 erfolgt in einem Abnahmebereich 6.

Für eine beschädigungsfreie Übergabe der Waffelblätter 2 auf dem Waffelblattförderer 4 können die Fächer 14 fingerförmige Fachabschnitte 18 umfassen. Mit diesen fingerförmigen Fachabschnitten 18 können die Waffelblätter 2 von unten aufgehoben und weitertransportiert werden. Insbesondere können durch die fingerförmigen Fachabschnitte 18 die Waffelblätter 2 auch wieder auf einer Fördervorrichtung 16 im Abnahmebereich 6 abgelegt werden.

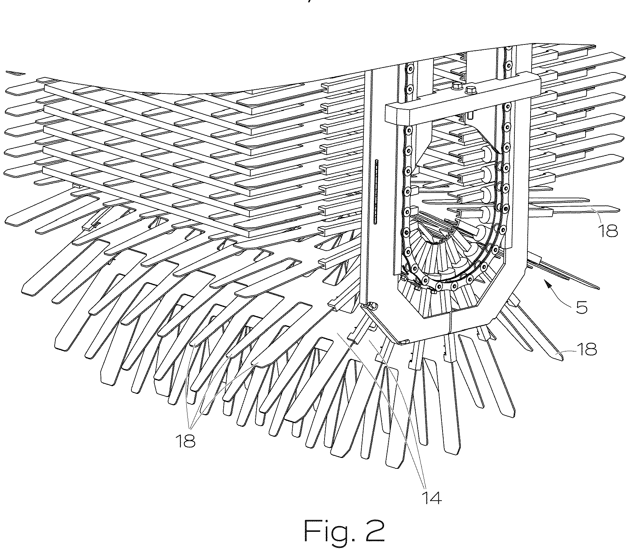

**Fig. 2** zeigt die fingerförmigen Fachabschnitte 18 der Fächer 14. Insbesondere kann auch der Endbereich, bzw. der dem Waffelblattförderer 4 zugewandte Endbereich der Fördervorrichtungen 16 fingerförmig ausgebildete Fortsätze haben. Gegebenenfalls können die Riemen eines Riemenförderers achsen- bzw. wellenlos umgelenkt sein, um Waffelblätter 2 zum Waffelblattförderer 4 zu fördern. In weiterer Folge greifen die fingerförmigen Fachabschnitte 18 kammförmig zwischen die Riemen der Fördervorrichtung 16, um die Waffelblätter 2 im Übergabebereich 5 von der nicht dargestellten Fördervorrichtung 16 abzunehmen. Im Abnahmebereich 6, in dem die Waffelblätter 2 vom Waffelblattförderer 4 abgenommen werden, bewegen sich die fingerförmigen Fachabschnitte 18 durch die Fortsätze der nicht dargestellten Fördervorrichtung 16, um die Waffelblätter 2 im Abnahmebereich 6 auf der Fördervorrichtung 16 abzulegen.

Bevorzugt ist vorgesehen, dass die Fächer 14 einen zentralen Mittenbereich aufweisen, von dem in beide Richtungen fingerförmige Fachabschnitte 18 ragen. Die eine Seite der fingerförmigen Fachabschnitte 18 ist dazu geeignet und/oder eingerichtet, die Waffelblätter 2 auf einer Seite des Waffelblattförderers 4 von der Fördervorrichtung 16 abzunehmen. Die andere Seite der fingerförmigen Fachabschnitte 18 ist dazu geeignet und/oder eingerichtet, die Waffelblätter 2 im Abnahmebereich 6 auf der auf der anderen Seite angeordneten Fördervorrichtung 16 abzulegen. Die Fächer 14 werden durch die Verschiebevorrichtung 11 von einem Förderabschnitt in den anderen Förderabschnitt verschoben, womit einmal die eine Seite des Fachs 14 nach außen weist, und im anderen Förderabschnitt die andere Seite des Fachs 14. Aus diesem Grund ist es vorteilhaft, wenn beidseitig fingerförmige Fachabschnitte 18 vorgesehen sind.

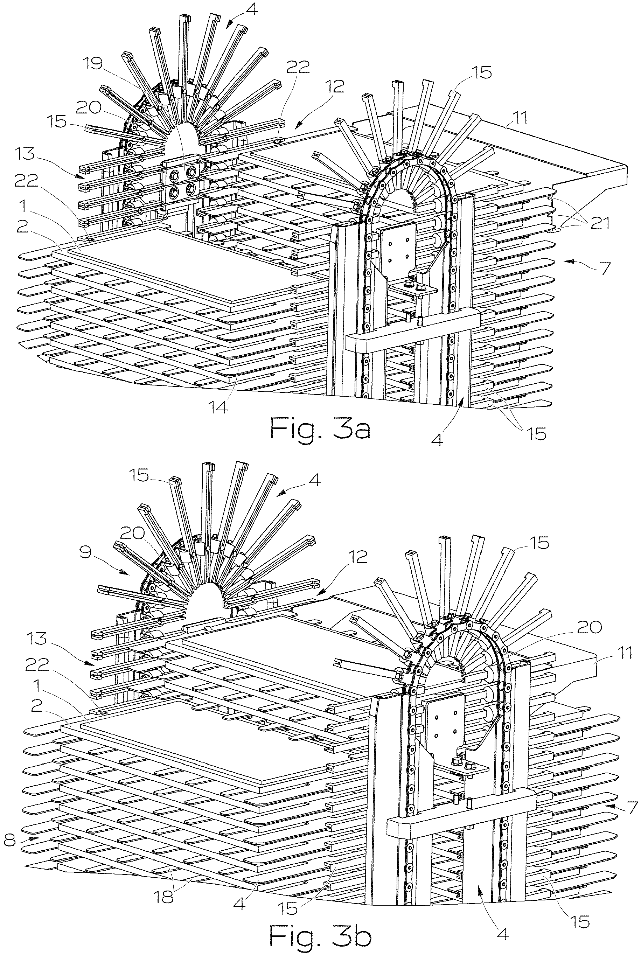

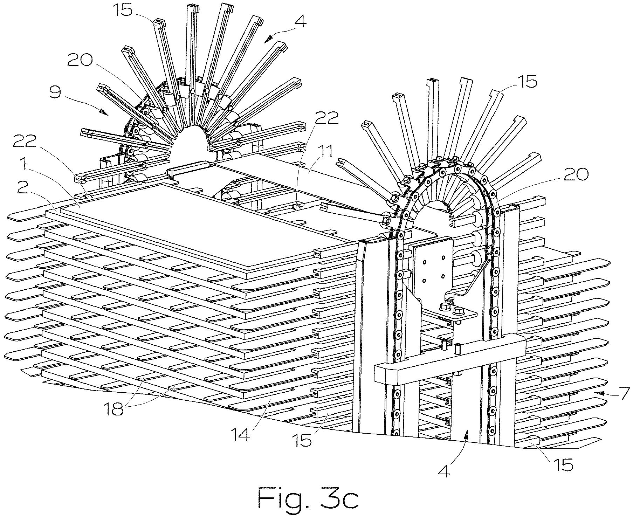

Die **Fig. 3a bis 3c** zeigen Komponenten der Kühlstation im Bereich der Verschiebevorrichtung 11 in unterschiedlichen Stellungen. Die Waffelblätter 2 werden entlang des ersten Förderabschnitts 7 in die Höhe befördert. Ist ein Waffelblatt 2 im Endbereich 12 des ersten Förderabschnitts 7 angekommen, so wird der Waffelblattförderer 4 angehalten, wie in Fig. 3a dargestellt. In weiterer Folge wird die Verschiebevorrichtung 11 betätigt, um die Waffelblätter 2 zum zweiten Förderabschnitt 8 zu verschieben, wie in Fig. 3b dargestellt. Insbesondere verschiebt die Verschiebevorrichtung 11 die Waffelblätter 2 vom Endbereich 12 des ersten Förderabschnitts 7 in den Anfangsbereich 13 des zweiten Förderabschnitts 8, wie in Fig. 3c dargestellt.

Bevorzugt ist in allen Ausführungsformen vorgesehen, dass die Waffelblätter 2 auf Fächern 14 liegend transportiert werden. Die Verschiebevorrichtung 11 wirkt in der vorliegenden Ausführungsform auf die Fächer 14. Insbesondere verschiebt die Verschiebevorrichtung 11 die Fächer 14 und dadurch auch die auf den Fächern 14 liegenden Waffelblätter 2. Bei angehaltenem Waffelblattförderer 4, insbesondere bei dem Verschiebevorgang durch die Verschiebevorrichtung 11, sind die Haltevorrichtungen 15 des Waffelblattförderers 4 so zueinander ausgerichtet, dass ein Fach 14 von einer Haltevorrichtung 15 im ersten Förderabschnitt 7 in eine weitere Haltevorrichtung 15 des zweiten Förderabschnitts 8 verschoben werden kann. Bevorzugt ist in allen Ausführungsformen vorgesehen, dass gleichzeitig mehrere Waffelblätter 2 und somit gegebenenfalls mehrere Fächer 14 bei einem Verschiebevorgang verschoben werden. In dieser Ausführungsform werden gleichzeitig drei Fächer 14 verschoben.

Ist der Verschiebevorgang abgeschlossen, so kann sich die Verschiebevorrichtung 11 wieder zurückziehen. In weiterer Folge wird der Waffelblattförderer 4 weiter bewegt, bis wiederum ein Waffelblatt 2 im Endbereich 12 des ersten Förderabschnitts 7 angeordnet ist. Gleichzeitig wird dadurch auch der der Waffelblattförderer 4 im zweiten Förderabschnitt 8 bewegt und die auf ihm angeordneten Waffelblätter 2 werden aus dem Bereich der Verschiebevorrichtung 11 entfernt. In weiterer Folge kann die Verschiebevorrichtung 11 wieder aktiv werden, um Waffelblätter 2 vom ersten Förderabschnitt 7 in den zweiten Förderabschnitt 8 befördern.

Zur Führung der Fächer 14 beim Verschieben vom ersten Förderabschnitt 7 in den zweiten Förderabschnitt 8 ist bevorzugt eine Führungsvorrichtung 19 vorgesehen. Diese Führungsvorrichtung 19 ist bevorzugt zwischen dem ersten Förderabschnitt 7 und dem zweiten Förderabschnitt 8 angeordnet und führt die Fächer 14 und/oder die Waffelblätter 2.

Gegebenenfalls kann die Führungsvorrichtung 19 Nuten umfassen, in denen die Fächer 14 geführt werden. Die Nuten können beispielsweise, wie in den Fig. 1 und 3 gezeigt, entlang der Verschieberichtung konisch zusammenlaufend ausgebildet sein, um die Fächer 14 in die Haltevorrichtungen 15 des zweiten Förderabschnitts 8 zielgerichtet einzuführen. In allen Ausführungsformen können Führungsvorrichtungen 19 alternativ durch aneinandergereihte Rollen bzw. Wälzlager gebildet sein, die die Fächer führen. Insbesondere können die Fächer von drehbar gelagerten Rollen entlang ihrer Verschieberichtung geführt werden.

Die Führungsvorrichtung 19 kann beispielsweise derart ausgebildet sein, dass sie die Fächer 14, die von einem Förderabschnitt 7 in den anderen Förderabschnitt 8 verschoben werden, seitlich entlang der Verschieberichtung führt. Die Fächer 14 werden dabei derart in ihrem Randbereich geführt, dass ausreichend Platz freigehalten wird, um die auf den Fächern 14 liegenden Waffelblätter 2 beschädigungsfrei zu transportieren bzw. zu verschieben. Die Führungsvorrichtung 19 ist insbesondere dazu eingerichtet, die Fächer 14 beim Verschieben zu stützen, sodass sie, abgesehen von den Haltevorrichtungen 15, auch noch an einer weiteren Stelle geführt gelagert sind. Zudem ist die Führungsvorrichtung 19 derart ausgebildet, dass sie die Fächer 14 beim Verschieben ausrichtet, sodass sie exakt in die Haltevorrichtung 15 des anderen bzw. zweiten Förderabschnitts 8 eingeführt werden können.

Bevorzugt ist die Führungsvorrichtung 19 durch mehrere Elemente gebildet, die beispielsweise beidseitig der Fächer 14 angeordnet sind. Bevorzugt weisen diese Elemente jeweils Einlaufschrägen oder Einlaufrundungen auf, die ein Einführen der Fächer 14 in die Führungsvorrichtung 19 auch dann ermöglicht, wenn durch Toleranzen eine exakte Führung der Fächer 14 in den Haltevorrichtungen 15 nicht gegeben ist.

Die Führung und die Einlaufschrägen können, wie angemerkt, beispielsweise durch Nuten gebildet sein, die entlang der Verschieberichtung der Fächer 14 konisch zusammenlaufend ausgebildet sind oder zumindest einen zusammenlaufenden Abschnitt aufweisen.

Alternativ oder zusätzlich kann die Führung durch aneinandergereihte Rollen bzw. Wälzlager gebildet sein. Durch die zylinderförmige oder radförmige Ausgestaltung bilden die Rollen Einlaufrundungen. Durch drehbar angeordnete Rollen kann eine Zentrierung bzw. eine exakte Führung der Fächer 14 erfolgen, wobei die Reibung bei der Führung gering wie möglich gehalten wird.

Zur Führung eines Faches 14 können beispielsweise beidseitig je vier Rollen vorgesehen sein. Die Rollen können jeweils paarweise angeordnet sein, sodass zwischen einem Paar von Rollen ein Spalt freigehalten ist, in dem das Fach 14 geführt wird. Dadurch, dass entlang des Verschiebewegs jeweils zwei Paare an Rollen angeordnet sind, kann auch die Richtung der Führung der Fächer 14 in der Führungsvorrichtung 19 exakt definiert werden. Werden bei dieser Konstruktion die Fächer 14 beidseitig geführt, so sind pro Fach 14 acht Rollen vorgesehen.

Alternativ kann jedoch auch eine Führung durch drei Rollen pro Seite vorgesehen sein, wobei auf jeder Seite zwei Führungsrollen und eine auf der anderen Seite des Faches 14 angeordnete Anpressrolle vorgesehen sind, sodass ebenfalls eine exakte Führung eines Faches 14 gebildet werden kann. Beispielsweise können die beiden Führungsrollen unterhalb des Fachs 14 angeordnet sein, und die Anpressrolle oberhalb des Fachs 14.

In allen Ausführungsformen ist bevorzugt vorgesehen, dass die Führungsvorrichtung 19 die Fächer 14 bei der Verschiebung von einem Förderabschnitt 7 zum anderen Förderabschnitt 8 im Mittenbereich, insbesondere zwischen den beiden Förderabschnitten 7, 8, führt, sodass die Fächer 14 zielgenau von einer Haltevorrichtung 15 in die Haltevorrichtung 15 des anderen Förderabschnitts 7 eingeführt werden.

Auch die Haltevorrichtungen 15 können bevorzugt in allen Ausführungsformen Einlaufschrägen aufweisen, um eine leichtere Einführung der Fächer 14 zu erlauben.

Bevorzugt umfasst der Waffelblattförderer 4 zumindest ein endloses Förderglied 20, beispielsweise einen Förderriemen oder eine Förderkette. An diesem Förderglied 20 können die Haltevorrichtungen 15 angebracht sein. Das Förderglied 20 ist bevorzugt ein endloses Förderglied, das sich gegebenenfalls geradlinig durch den ersten Förderabschnitt 7 und den zweiten Förderabschnitt 8 erstreckt, und in den Umlenkabschnitten 9, 10 um 180° umgelenkt wird. Durch diese Umlenkung des Förderglieds 20 werden auch die Haltevorrichtungen 15 um 180° gewendet. In der vorliegenden Ausführungsform sind zwei Förderglieder 20 vorgesehen, die beidseitig der Waffelblätter 2 bzw. beidseitig der Fächer 14 angeordnet sind. Beide Förderglieder 20 sind mit mehreren Haltevorrichtungen 15 versehen, sodass die Haltevorrichtungen 15 die Fächer 14 beidseitig halten. Die beiden Förderglieder 20 können beispielsweise über einen Antrieb angetrieben sein. Gegebenenfalls sind zwei synchronisierte Antriebe vorhanden oder es ist ein Antrieb vorhanden, wobei dessen Bewegung über eine Welle auf beide Förderglieder 20 übertragen wird.

## Patentansprüche

1. Kühlstation zur Kühlung von Waffelblättern (2), die gegebenenfalls mit einer Creme versehen und/oder zu Waffelblöcken zusammengesetzt sind, umfassend:
- einen Kühlbereich (3) zur Kühlung der Waffelblätter (2),
- einen sich durch den Kühlbereich (3) erstreckenden Waffelblattförderer (4) zum Transport der Waffelblätter (2),
- einen Übergabebereich (5), zur Übergabe der Waffelblätter (2) an den Waffelblattförderer (4),
- einen Abnahmebereich (6), zur Abnahme der Waffelblätter (2) von dem Waffelblattförderer (4),
- einen ersten Förderabschnitt (7) des Waffelblattförderers (4), in dem die Waffelblätter (2) im Wesentlichen parallel und beabstandet übereinander aufwärts befördert werden,
- einen zweiten Förderabschnitt (8) des Waffelblattförderers (4), in dem die Waffelblätter (2) im Wesentlichen parallel und beabstandet übereinander abwärts befördert werden,
- einen ersten Umlenkabschnitt (9), in dem der Waffelblattförderer (4) von dem ersten Förderabschnitt (7) auf den zweiten Förderabschnitt (8) umgelenkt wird,
- einen zweiten Umlenkabschnitt (10), in dem der Waffelblattförderer (4) von dem zweiten Förderabschnitt (8) wieder auf den ersten Förderabschnitt (7) umgelenkt wird,
**dadurch gekennzeichnet,**
- **dass** eine Verschiebevorrichtung (11) vorgesehen ist, die die Waffelblätter (2) quer zum Verlauf des Waffelblattförderers (4) von einem Förderabschnitt (7,8) des Waffelblattförderers (4), insbesondere vom ersten Förderabschnitt (7), in den anderen Förderabschnitt (7,8), insbesondere in den zweiten Förderabschnitt (8) verschiebt.

2. Kühlstation nach Anspruch 1, **dadurch gekennzeichnet,**
- **dass** die Verschiebevorrichtung (11) die Waffelblätter (2) im Endbereich (12) eines Förderabschnitts in den Anfangsbereichs (13) des anderen Förderabschnitts transportiert,
- insbesondere dass die Verschiebevorrichtung die Waffelblätter (2) im Endbereich (12) des ersten Förderabschnitts (7) in den Anfangsbereich (13) des zweiten Förderabschnitts (8) transportiert.

3. Kühlstation nach Anspruch 1 oder 2, **dadurch gekennzeichnet, dass** der Waffelblattförderer (4) und die Verschiebevorrichtung (11) zum Transport von einseitig mit einer Creme versehenen Waffelblättern eigerichtet sind und derart ausgestaltet sind, dass die Waffelblätter (2) beim Transport durch die Kühlstation einzeln und stets mit ihrer mit der Creme (1) versehenen Seite nach oben weisend transportiert werden.

4. Kühlstation nach einem der Ansprüche 1 bis 3, **dadurch gekennzeichnet, dass** der erste Förderabschnitt (7) und der zweite Förderabschnitt (8) im Wesentlichen vertikal und parallel nebeneinander verlaufen.

5. Kühlstation nach einem der Ansprüche 1 bis 4, **dadurch gekennzeichnet, dass** die Verschiebevorrichtung (11) dazu eingerichtet ist, bei einem Schiebevorgang mindestens ein Waffelblatt (2), bevorzugt zwei, drei, vier, fünf oder mehr Waffelblätter (2) von einem Förderabschnitt in den anderen Förderabschnitt zu verschieben.

6. Kühlstation nach einem der Ansprüche 1 bis 5, **dadurch gekennzeichnet,**
- **dass** am Waffelblattförderer (4) mehrere im Wesentlichen waagrecht verlaufende **Fächer (14)** angebracht sind, auf denen die Waffelblätter (2) aufliegend transportiert werden,
- und **dass** jedes Fach (14) bevorzugt nur ein Waffelblatt (2) oder einen Waffelblock transportiert.

7. Kühlstation nach Anspruch 6, **dadurch gekennzeichnet, dass** die Verschiebevorrichtung (11) beim Transport der Waffelblätter (2) von einem Förderabschnitt in den anderen Förderabschnitt die Fächer (14) samt den auf den Fächern (14) aufgelagerten Waffelblättern (2) verschiebt.

8. Kühlstation nach einem der Ansprüche 6 oder 7, **dadurch gekennzeichnet,**
- **dass** der Waffelblattförderer (4) mehrere **Haltevorrichtungen (15)** zur Halterung der Fächer (14) am Waffelblattförderer (4) aufweist, wobei die Haltevorrichtungen (15) derart ausgestaltet sind, dass sie im Bereich der Verschiebevorrichtung (11) eine Verschiebung der Fächer (14) quer zum Verlauf des Waffelblattförderers (4) von einer Haltevorrichtung (15) des einen Förderabschnitts in eine Haltevorrichtung (15) des anderen Förderabschnitts ermöglichen,
- und/oder dass die Haltevorrichtungen (15) im ersten Förderbereich und im zweiten Förderbereich im Wesentlichen waagrecht verlaufende, schienen- oder nutförmige Führungen sind,
- und/oder dass eine Haltemechanik (22) vorgesehen sein, die ein Herausfallen der Fächer (14) aus den Haltevorrichtungen (15) verhindert aber eine Verschiebung der Fächer (14) durch die Verschiebevorrichtung (11) ermöglicht,
- insbesondere dass die Haltemechanik (22) zur Entnahme eines Fachs (14) lösbar, insbesondere werkzeuglos lösbar ausgebildet ist.

9. Kühlstation nach Anspruch 8, **dadurch gekennzeichnet,**
- **dass** im Bereich der Verschiebevorrichtung (11), zwischen dem ersten Förderabschnitt (7) und dem zweiten Förderabschnitt (8), eine Führungsvorrichtung (19) vorgesehen ist, die die Fächer (14) beim Verschiebevorgang jeweils von der Haltevorrichtung (15) des einen Förderabschnitts Richtung und/oder in die Haltevorrichtung (15) des anderen Förderabschnitts führt.

10. Kühlstation nach einem der Ansprüche 6 bis 9, **dadurch gekennzeichnet,**
- **dass** die Fächer (14) jeweils einen oder mehrere fingerförmig nach außen ragende Fachabschnitte (18) aufweisen, die im Übergabebereich (5) und/oder im Abnahmebereich (6) zwischen ein oder mehrere Förderelemente greifen, um ein Waffelblatt (2) aufzunehmen oder abzulegen.

11. **Verfahren** zur Kühlung von Waffelblättern, die gegebenenfalls mit einer Creme versehen und/oder zu Waffelblöcken zusammengesetzt sind, insbesondere in einer Kühlstation nach einem der Ansprüche 1 bis 10, umfassend folgende Schritte:
- Transportieren von Waffelblättern in einem ersten Förderabschnitt eines Waffelblattförderers in eine erste Richtung entlang einer Hochachse,
- danach, Transportieren der Waffelblätter in einem zweiten Förderabschnitt des Waffelblattförderers in eine zweite Richtung entlang einer Hochachse, die der ersten Richtung im Wesentlichen entgegengesetzt ist,
- Kühlen der Waffelblätter während des Transports entlang des Waffelblattförderers,
**dadurch gekennzeichnet,**
- **dass** die Waffelblätter von einer Verschiebevorrichtung quer zum Verlauf des Waffelblattförderers vom ersten Förderabschnitt in den zweiten Förderabschnitt verschoben werden.

12. Verfahren nach Anspruch 11, **dadurch gekennzeichnet, dass** die Waffelblätter mit einer Creme versehen sind und beim Transport durch die Kühlstation einzeln und stets mit ihrer mit der Creme versehen Seite nach oben transportiert werden.

13. Verfahren nach Anspruch 11 oder 12, **dadurch gekennzeichnet,**
- **dass** der Waffelblattförderer angehalten wird, sobald sich die gewünschte Anzahl an Waffelblättern im Bereich der Verschiebevorrichtung befindet,
- **dass** die Verschiebevorrichtung in einem Verschiebvorgang das Waffelblatt oder die Waffelblätter bei angehaltenem Waffelblattförderer vom ersten Förderabschnitt in den zweiten Förderabschnitt verschiebt,
- und **dass** der Waffelblattförderer anschließend weiterbewegt wird um weitere Waffelblätter in den Verschiebebereich zu befördern.

14. Verfahren nach einem der Ansprüche 11 bis 13, **dadurch gekennzeichnet, dass** die Waffelblätter von der Verschiebevorrichtung waagrecht verschoben werden.

15. Verfahren nach einem der Ansprüche 11 bis 14, **dadurch gekennzeichnet, dass** die Verschiebvorrichtung bei einem Schiebevorgang mindestens ein Waffelblatt, bevorzugt zwei, drei, vier, fünf oder mehr Waffelblätter von einem Förderabschnitt in den anderen Förderabschnitt verschiebt.
